(19) Europäisches Patentamt / European Patent Office / Office européen des brevets

(11) EP 4 800 055 A1

(12) **EUROPEAN PATENT APPLICATION**
published in accordance with Art. 153(4) EPC

(43) Date of publication: **02.09.2026 Bulletin 2026/36**

(21) Application number: **24882482.3**

(22) Date of filing: **25.10.2024**

(51) International Patent Classification (IPC):
***C08G 77/46*** (2006.01) ***C08G 65/336*** (2006.01) ***C08G 81/00*** (2006.01) ***C09K 23/42*** (2022.01) ***C09K 23/54*** (2022.01)

(52) Cooperative Patent Classification (CPC):
**C08G 65/336; C08G 77/46; C08G 81/00; C09K 23/42; C09K 23/54**

(86) International application number:
**PCT/JP2024/038059**

(87) International publication number:
**WO 2025/089374 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 JP 2023184596**

(71) Applicants:
- **SHIN-ETSU CHEMICAL CO., LTD.**
**Tokyo 100-0005 (JP)**
- **NOF Corporation**
**Tokyo 150-6012 (JP)**

(72) Inventors:
- **GOTO, Tomoyuki**
**Annaka-shi, Gunma 379-0224 (JP)**
- **MURAI, Masaki**
**Kawasaki-shi, Kanagawa 210-0865 (JP)**
- **YOSHIKAWA, Fumitaka**
**Kawasaki-shi, Kanagawa 210-0865 (JP)**

(74) Representative: **V.O.**
**P.O. Box 87930**
**2508 DH Den Haag (NL)**

(54) **POLYETHER-MODIFIED ORGANOPOLYSILOXANE**

(57) [Object] The object of the present invention is to provide a polyether-modified organopolysiloxane which has a polyether chain and exhibits good water solubility without impairing the characteristics of siloxane.

[Solution] A polyether-modified organopolysiloxane represented by the following formula (1), having a block copolymer structure comprising a polyoxyethylene block structure and a polyoxypropylene block structure:

$$R^1-\underset{R}{\overset{R}{|}}\!\!\!\!\text{SiO}\left(\underset{R}{\overset{R}{|}}\!\!\!\!\text{SiO}\right)_x\underset{R}{\overset{R}{|}}\!\!\!\!\text{Si}-R^1 \quad (1)$$

wherein R is, independently of each other, a group selected from an alkyl group having 1 to 10 carbon atoms, an aryl group having 6 to 10 carbon atoms, and an aralkyl group having 7 to 10 carbon atoms; x is an integer of 1 to 100; and $R^1$ is, independently of each other, a group represented by the following formula (2):

EP 4 800 055 A1

$$-\!\left(CH_2\right)_n O \left(C_3H_6O\right)_a \left(C_2H_4O\right)_b R^2 \quad (2)$$

wherein $R^2$ is an alkyl group having 1 to 12 carbon atoms or an acetyl group; n is an integer of 2 to 10; ***a*** is an integer of 3 to 60; ***b*** is an integer of 3 to 60; ***a*** and ***b*** satisfy ***b/(a + b)*** being in the range of 0.3 to 0.8; and the oxypropylene units in parentheses with the subscript ***a*** and the oxyethylene units in parentheses with the subscript ***b*** each have a polyblock structure in the sequence shown in formula (2).

## Description

### TECHNICAL FIELD

The present invention relates to a polyether-modified organopolysiloxane.

### BACKGROUND ART

Water-soluble polyether-modified polyorganosiloxanes are extremely useful materials in a wide range of fields, including agricultural adjuvants, coating additives, and cosmetics. Since the siloxane chains and oxypropylene chains in polyether-modified polyorganosiloxanes are hydrophobic, conventional approaches for imparting water solubility include increasing the proportion of hydrophilic oxyethylene groups in the molecule and introducing hydroxyl groups at the terminals of the polyether chains (Patent Literature 1, 2, and 3).

### PRIOR LITERATURE

### PATENT LITERATURE

[Patent Literature 1] Japanese Patent Application Laid-Open No. 2000-327787
[Patent Literature 2] Japanese Patent Application Laid-Open No. 2003-253166
[Patent Literature 3] Japanese Patent Application Laid-Open No. 2018-070794

### SUMMARY OF THE INVENTION

### PROBLEM TO BE SOLVED BY THE INVENTION

However, polyether-modified polyorganosiloxanes obtained by increasing the proportion of oxyethylene groups in the molecule or by introducing hydroxyl groups at the terminals of the polyether chains exhibit water solubility, but suffer from a problem in that advantages imparted by siloxane, such as surface migration and leveling properties, are impaired. The present invention has been made in view of the above circumstances, and the object of the present invention is to provide a polyether-modified organopolysiloxane which has a polyether chain and exhibits good water solubility without impairing the characteristics of siloxane.

### MEANS FOR SOLVING THE PROBLEMS

As a result of intensive studies conducted to achieve the above objective, the present inventor has found that a polyether-modified siloxane having a specific structure shown below solves the above-mentioned problems, thereby completing the present invention.
That is, the present invention provides:

[1] A polyether-modified organopolysiloxane represented by the following formula (1), which has a block copolymer structure comprising a polyoxyethylene block structure and a polyoxypropylene block structure:

$$R^1-\underset{R}{\overset{R}{|}}\!\!\!\!SiO-\left(\underset{R}{\overset{R}{|}}\!\!\!\!SiO\right)_x-\underset{R}{\overset{R}{|}}\!\!\!\!Si-R^1 \qquad (1)$$

wherein R is, independently of each other, a group selected from an alkyl group having 1 to 10 carbon atoms, an aryl group having 6 to 10 carbon atoms, and an aralkyl group having 7 to 10 carbon atoms; x is an integer of 1 to 100; and $R^1$ is, independently of each other, a group represented by the following formula (2):

$$-\left(CH_2\right)_n O \left(C_3H_6O\right)_a \left(C_2H_4O\right)_b R^2 \quad (2)$$

wherein $R^2$ is an alkyl group having 1 to 12 carbon atoms or an acetyl group; n is an integer of 2 to 10; ***a*** is an integer of 3 to 60; ***b*** is an integer of 3 to 60; ***a*** and ***b*** satisfy ***b/(a + b)*** being in the range of 0.3 to 0.8; and the oxypropylene units in parentheses with the subscript ***a*** and the oxyethylene units in parentheses with the subscript ***b*** each have a polyblock structure in the sequence shown in formula (2).

The present invention further provides the polyether-modified organopolysiloxane having at least one configuration of the following items [2] to [4].

[2] The polyether-modified organopolysiloxane according to the item [1], wherein the polyether-modified organopolysiloxane has a HLB value of 4 to 7 according to the Griffin method.

[3] The polyether-modified organopolysiloxane according to the item [1] or [2], wherein a 1% by mass aqueous solution of the polyether-modified organopolysiloxane has a haze value of 5 or less at 25°C.

[4] The polyether-modified organopolysiloxane according to any one of the items [1] to [3], wherein the polyether-modified organopolysiloxane has a HLB value of 4 to 7 according to the Griffin method, and a 1% by mass aqueous solution thereof has a haze value of 5 or less at 25°C.

By virtue of having the aforementioned block copolymer structure, the polyether-modified organopolysiloxane of the present invention exhibits high water solubility, even when the polyether moiety has no hydroxyl group at its terminal and the proportion of oxyethylene units in the molecule is low.

The polyether-modified organopolysiloxane of the present invention preferably has a HLB value of 4 to 7 according to the Griffin method and a haze value of 5 or less at 25°C in a 1% by mass aqueous solution thereof. The polyether-modified organopolysiloxane having such a HLB value and haze value exhibits high water solubility. Furthermore, the advantages of siloxane, such as surface migration and leveling properties, can be maintained.

## EFFECTS OF THE INVENTION

The polyether-modified organopolysiloxane of the present invention exhibits good water solubility without impairing the characteristics of siloxane. The polyether-modified organopolysiloxane is useful in a wide range of applications, including coating additives, resin additives, and cosmetics.

## MODE FOR CARRYING OUT THE INVENTION

The present invention will be explained below in more detail.

The polyether-modified polyorganopolysiloxane of the present invention is represented by the following formula (1), which has a block copolymer structure comprising a polyoxyethylene block structure and a polyoxypropylene block structure.

$$R^1-\underset{R}{\overset{R}{|}}{Si}O\left(\underset{R}{\overset{R}{|}}{Si}O\right)_x\underset{R}{\overset{R}{|}}{Si}-R^1 \quad (1)$$

In formula (1), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include a methyl group, an ethyl group, a propyl group, a butyl group, a pentyl group, a hexyl group, a cyclohexyl group, an octyl group, and a decyl group. Examples of the aryl group having 6 to 10 carbon atoms include a phenyl group and a tolyl group. Examples of the aralkyl group having 7 to 10 carbon atoms include a benzyl group and a phenethyl group. Among them, R is preferably a methyl group, an ethyl group, a propyl group, a butyl group, and a phenyl group, even more preferably a methyl group and a phenyl group, most preferably a methyl group.

In formula (1), x is an integer of 1 to 100, preferably an integer of 3 to 80, more preferably an integer of 5 to 60, even

more preferably an integer of 10 to 50, most preferably an integer of 15 to 40. If x is smaller than the lower limit, the characteristics of siloxane are insufficiently exhibited. If x is larger than the upper limit, the water solubility of the polyether-modified polyorganopolysiloxane may be impaired.

In formula (1), $R^1$ is, independently of each other, a group represented by the following formula (2).

$$-\left(CH_2\right)_n-O-\left(C_3H_6O\right)_a\left(C_2H_4O\right)_b-R^2 \quad (2)$$

In formula (2), $R^2$ is an alkyl group having 1 to 12 carbon atoms or an acetyl group. Examples of the alkyl group having 1 to 12 carbon atoms include a methyl group, an ethyl group, a propyl group, a butyl group, a pentyl group, a hexyl group, a cyclohexyl group, an octyl group, a decyl group, and a dodecyl group. Among them, $R^2$ is preferably a methyl group, an ethyl group, a propyl group, an n-butyl group, an octyl group, a dodecyl group, and an acetyl group, even more preferably a methyl group, an ethyl group, a propyl group, an n-butyl group, and an acetyl group. Among them, a methyl group, an n-butyl group, and an acetyl group are most preferred, in view of availability.

In formula (2), n is an integer of 2 to 10, preferably n is an integer of 3 to 8 and, in view of availability, most preferably n is 3.

In formula (2), ***a*** is an integer of 3 to 60, preferably an integer of 3 to 50, more preferably an integer of 4 to 40, even more preferably an integer of 5 to 30, most preferably an integer of 10 to 20. If ***a*** is smaller than the lower limit, compatibility with other materials may be impaired. Further, if ***a*** is larger than the upper limit, the water solubility of the polyether-modified polyorganosiloxane may be impaired.

In formula (2), ***b*** is an integer of 3 to 60, preferably an integer of 3 to 50, more preferably an integer of 4 to 40, even more preferably an integer of 5 to 30, most preferably an integer of 10 to 20. If ***b*** is smaller than the lower limit, the water solubility of the polyether-modified polyorganosiloxane may be insufficient. If ***b*** is larger than the upper limit, the characteristics of siloxane may not be sufficiently exhibited.

In formula (2), ***a*** and ***b*** are such that the value of ***b/(a*** + ***b)*** is within the range of 0.3 to 0.8, preferably 0.32 to 0.7, more preferably 0.32 to 0.6, even more preferably 0.35 to 0.55, most preferably 0.4 to 0.5. If the value of ***b/(a*** + ***b)*** is smaller than the lower limit, the water solubility of the polyether-modified polyorganosiloxane may be insufficient. If the value of ***b/(a*** + **b**) is larger than the upper limit, the characteristics of siloxane may not be sufficiently exhibited.

In formula (2), the oxypropylene units in parentheses with the subscript ***a*** and the oxyethylene units in parentheses with the subscript ***b*** each have a polyblock structure in the sequence shown in formula (2). By virtue of having such a polyblock structure, the polyether-modified polyorganosiloxane exhibits high water solubility, while better maintaining the characteristics of siloxane.

Preferably, the polyether-modified polyorganosiloxane represented by formula (1) has a HLB value of 4 to 7 according to the Griffin method, and a 1% by mass aqueous solution thereof has a haze value of 5 or less at 25°C. The HLB value can be calculated according to the following formula:

HLB = {(oxyethylene group content) × 20} / (total amount of the polyether-modified polyorganosiloxane)

The polyether-modified polyorganosiloxane more preferably has a HLB value of 4.1 to 6.8, even more preferably 4.2 to 6.6, and most preferably 4.2 to 6.0. When the HLB value of the polyether-modified polyorganosiloxane is equal to or greater than the lower limit, sufficient water solubility is achieved. Furthermore, when the HLB value is equal to or less than the upper limit, the characteristics of siloxane is sufficiently exhibited.

The polyether-modified polyorganosiloxane preferably has a haze value of 5 or less at 25°C in a 1% by mass aqueous solution thereof, more preferably 0 or more and 4 or less, and even more preferably more than 0 and 2 or less. When the haze value is equal to or less than the upper limit, the polyether-modified polyorganosiloxane of the present invention exhibits extremely high water solubility.

The polyether-modified polyorganosiloxane may be prepared by an addition reaction between an organohydrogen polysiloxane and an alkenyl group-containing polyether. The addition reaction is preferably carried out in the presence of an addition reaction catalyst. As the addition reaction catalyst, any catalyst commonly used for addition reactions may be used. For example, a noble metal catalyst such as a platinum group metal compound can be used, and examples thereof include platinum-based, palladium-based, rhodium-based, and ruthenium-based catalysts. Among these, platinum-based catalysts are particularly preferred. Examples of the platinum-based catalyst include chloroplatinic acid, an alcohol solution or aldehyde solution of chloroplatinic acid, and complexes of chloroplatinic acid with various olefins or vinylsiloxanes. Among these, a solution of a sodium bicarbonate-neutralized chloroplatinic acid-vinylsiloxane

complex (Karstedt's catalyst) is suitably used.

In the addition reaction, the ratio of the organohydrogen polysiloxane relative to the alkenyl group-containing polyether is such that the ratio of the number of moles of alkenyl groups in the alkenyl group-containing polyether is preferably 1.00 to 2.00, more preferably 1.05 to 1.50, even more preferably 1.02 to 1.30, relative to the number of moles of Si-H groups in the organohydrogen polysiloxane.

The amount of the addition reaction catalyst may be a catalytic amount. In particular, the amount, calculated as a metal, is preferably 0.1 to 100 ppm, more preferably 0.5 to 50 ppm, and most preferably 1 to 20 ppm, based on the total amount of the organohydrogen polysiloxane and the alkenyl group-containing polyether. By using the addition reaction catalyst in an amount within the above ranges, a sufficient reaction rate is achieved while suppressing side reactions.

The reaction temperature of the addition reaction is not particularly limited, but is preferably 0 to 150°C, and more preferably 20 to 100°C. When the reaction temperature is in the range of 0 to 150°C, a sufficient reaction rate is achieved while suppressing side reactions.

Furthermore, a reaction solvent may be used in the addition reaction, if necessary. Examples of the solvent include aromatic hydrocarbon solvents such as toluene and xylene; aliphatic hydrocarbon solvents such as hexane, methylcyclohexane, and ethylcyclohexane; ether solvents such as dioxane, dibutyl ether, and dimethoxyethane; ester solvents such as ethyl acetate and butyl acetate; nitrile solvents such as acetonitrile and benzonitrile; and alcohol solvents such as ethanol, propanol, isopropyl alcohol, and butanol.

## EXAMPLES

The present invention will be explained in more detail with reference to the following Examples and Comparative Examples; however, the present invention is not limited to the following Examples.

Haze Value

The haze value at 25°C of a 1% by mass aqueous solution of the polyether-modified polyorganosiloxane described below was measured using a haze meter with a cell having a path length of 1 cm. After measuring a blank (air) at 25°C, the haze value of each sample was measured.

Instrument: NDH-4000 Haze Meter, Nippon Denshoku Industries Co., Ltd.

Synthetic Example 1

Placed in a 5-liter autoclave equipped with a stirrer, a nitrogen inlet tube, and a thermocouple were 100 g of n-butanol and 3.86 g of sodium methoxide. After purging with nitrogen, the temperature was raised to 120°C, and 622 g of ethylene oxide was added dropwise under a pressure of 0.3 MPa (gauge pressure) or less, followed by stirring for 1 hour. Subsequently, 821 g of propylene oxide was added dropwise at 120°C under a pressure of 0.2 to 0.5 MPa (gauge pressure), and the mixture was stirred for 2 hours. Thereafter, unreacted ethylene oxide and propylene oxide were removed by decompression at 75 to 85°C and 50 to 100 Torr for 1 hour. Then 139 g of potassium hydroxide and 86 g of allyl chloride were added. After purging with nitrogen, the reaction was carried out at 120°C for 3 hours, and 560 g of water was added, followed by stirring for 10 minutes. The mixture was allowed to stand for 1 hour, and the separated lower layer was removed, and the upper layer was recovered. The pH was adjusted to 6 to 7 with hydrochloric acid, and the mixture was dried under reduced pressure at 100°C for 1 hour (gauge pressure: 0.095 MPa) to remove moisture. Subsequently, the generated salts were removed by filtration, thereby obtaining about 1,400 g of a polyoxyalkylene monoallyl ether represented by the following formula (3).

$$CH_2{=}CH{-}CH_2{-}O{-}(C_3H_6O)_{15}{-}(C_2H_4O)_{15}{-}(CH_2)_3{-}CH_3 \quad (3)$$

wherein, in formula (3), the oxypropylene units and oxyethylene units each form block structures in the sequence shown above, and ***a*** and ***b*** in formula (1) satisfy the equation of ***b*/(*a* + *b*)** = 0.5.

[Example 1]

Placed in a reaction container were 692 g of the polyoxyalkylene monoallyl ether represented by formula (3) and 220 g of a siloxane represented by the following formula (4), followed by adding 76 mg of an isopropyl alcohol solution

containing 3% by mass of chloroplatinic acid, and the reaction mixture was allowed to react at 90°C for 2 hours.

$$H-\underset{CH_3}{\overset{CH_3}{|}}{Si}O-\left(\underset{CH_3}{\overset{CH_3}{|}}{Si}O\right)_{18}-\underset{CH_3}{\overset{CH_3}{|}}{Si}-H \quad (4)$$

After the reaction, volatile components were removed at 100°C/3 torr for 1 hour, and 862 g of the target polyether-modified siloxane represented by the following formula (A) was obtained:

$$R'-\underset{CH_3}{\overset{CH_3}{|}}{Si}O-\left(\underset{CH_3}{\overset{CH_3}{|}}{Si}O\right)_{18}-\underset{CH_3}{\overset{CH_3}{|}}{Si}-R' \quad (A)$$

$$R':\ -(CH_2)_3O-(C_3H_6O)_{15}-(C_2H_4O)_{15}-(CH_2)_3-CH_3$$

wherein in formula (A), the oxypropylene units and oxyethylene units each form block structures in the sequence shown above, and ***a*** and ***b*** in formula (1) satisfy the equation of ***b*/(*a* + *b*)** = 0.5.

The HLB value of the polyether-modified siloxane (A) thus obtained was 5.6, and the haze value at 25°C of a 1% by mass aqueous solution was 0.28.

[Example 2]

The procedure of Example 1 was repeated, except that 440 g of a siloxane represented by the following formula (6) was used instead of 220 g of the siloxane represented by formula (4) in Example 1, thereby obtaining 1,072 g of a polyether-modified siloxane represented by the following formula (B):

$$H-\underset{CH_3}{\overset{CH_3}{|}}{Si}O-\left(\underset{CH_3}{\overset{CH_3}{|}}{Si}O\right)_{38}-\underset{CH_3}{\overset{CH_3}{|}}{Si}-H \quad (6)$$

$$R'-\underset{CH_3}{\overset{CH_3}{|}}SiO-\left(\underset{CH_3}{\overset{CH_3}{|}}SiO\right)_{38}-\underset{CH_3}{\overset{CH_3}{|}}Si-R' \quad (B)$$

$$R': -(CH_2)_3-O-(C_3H_6O)_{15}-(C_2H_4O)_{15}-(CH_2)_3-CH_3$$

wherein in formula (B), the oxypropylene units and oxyethylene units each form block structures in the sequence shown above, and ***a*** and ***b*** in formula (1) satisfy the equation of ***b*/(*a* + *b*)** = 0.5.

The HLB value of the polyether-modified siloxane (B) thus obtained was 4.2, and the haze value at 25°C of a 1% by mass aqueous solution was 2.0.

[Example 3]

The procedure of Example 1 was repeated, except that 687 g of a polyoxyalkylene monoallyl ether represented by the following formula (7) was used instead of 692 g of the polyoxyalkylene monoallyl ether represented by formula (3) in Example 1, thereby obtaining 859 g of a polyether-modified siloxane represented by the following formula (C).

$$CH_2=CH-CH_2-O-(C_3H_6O)_{15}-(C_2H_4O)_{15}-CH_3 \quad (7)$$

wherein in formula (7), the oxypropylene units and oxyethylene units each form block structures in the sequence shown above, and ***a*** and ***b*** in formula (1) satisfy the equation of ***b*/(*a* + *b*)** = 0.5.

$$R'-\underset{CH_3}{\overset{CH_3}{|}}SiO-\left(\underset{CH_3}{\overset{CH_3}{|}}SiO\right)_{18}-\underset{CH_3}{\overset{CH_3}{|}}Si-R' \quad (C)$$

$$R': -(CH_2)_3-O-(C_3H_6O)_{15}-(C_2H_4O)_{15}-CH_3$$

wherein in formula (C), the oxypropylene units and oxyethylene units each form block structures in the sequence shown above, and ***a*** and ***b*** satisfy the equation of ***b*/(*a* + *b*)** = 0.5.

The HLB value of the polyether-modified siloxane (C) thus obtained was 5.7, and the haze value at 25°C of a 1% by mass aqueous solution was 0.25.

[Example 4]

The procedure of Example 1 was repeated, except that 738 g of a polyoxyalkylene monoallyl ether represented

by the following formula (8) was used instead of 692 g of the polyoxyalkylene monoallyl ether represented by formula (3) in Example 1, thereby obtaining 907 g of a polyether-modified siloxane represented by the following formula (D):

$$CH_2{=}CH{-}CH_2{-}O{-}(C_3H_6O)_{15}{-}(C_2H_4O)_{15}{-}(CH_2)_{11}{-}CH_3 \qquad (8)$$

wherein in formula (8), the oxypropylene units and oxyethylene units each form block structures in the sequence shown above, and ***a*** and ***b*** in formula (1) satisfy the equation of ***b*/(*a* + *b*)** = 0.5.

$$R'{-}Si(CH_3)_2O{-}(Si(CH_3)_2O)_{18}{-}Si(CH_3)_2{-}R' \qquad (D)$$

$$R': \ {-}(CH_2)_3{-}O{-}(C_3H_6O)_{15}{-}(C_2H_4O)_{15}{-}(CH_2)_{11}{-}CH_3$$

wherein in formula (D), the oxypropylene units and oxyethylene units each form block structures in the sequence shown above, and ***a*** and ***b*** in formula (1) satisfy the equation of ***b*/(*a* + *b*)** = 0.5.

The HLB value of the polyether-modified siloxane (D) thus obtained was 5.3, and the haze value at 25°C of a 1% by mass aqueous solution was 3.4.

[Example 5]

The procedure of Example 1 was repeated, except that 578 g of a polyoxyalkylene monoallyl ether represented by the following formula (9) was used instead of 692 g of the polyoxyalkylene monoallyl ether represented by formula (3) in Example 1, thereby obtaining 751 g of a polyether-modified siloxane represented by the following formula (E):

$$CH_2{=}CH{-}CH_2{-}O{-}(C_3H_6O)_{15}{-}(C_2H_4O)_{10}{-}CH_3 \qquad (9)$$

wherein in formula (9), the oxypropylene units and oxyethylene units each form block structures in the sequence shown above, and ***a*** and ***b*** in formula (1) satisfy the equation of ***b*/(*a* + *b*)** = 0.4.

$$R'{-}Si(CH_3)_2O{-}(Si(CH_3)_2O)_{18}{-}Si(CH_3)_2{-}R' \qquad (E)$$

$$R': -(CH_2)_3-O-(C_3H_6O)_{15}-(C_2H_4O)_{10}-CH_3$$

wherein the oxypropylene units and oxyethylene units each form block structures in the sequence shown above, and ***a*** and ***b*** in formula (1) satisfy the equation of ***b*/(*a* + *b*)** = 0.4.

The HLB value of the polyether-modified siloxane thus obtained was 4.2, and the haze value at 25°C of a 1% by mass aqueous solution was 1.0.

[Example 6]

The procedure of Example 1 was repeated, except that 691 g of a polyether represented by the following formula (10) was used instead of 692 g of the polyether represented by formula (3) in Example 1, thereby obtaining 858 g of a polyether-modified siloxane of the following formula (F):

$$CH_2=CH-CH_2-O-(C_3H_6O)_{15}-(C_2H_4O)_{15}-C(=O)-CH_3 \qquad (10)$$

wherein in formula (10), the oxypropylene units and oxyethylene units each form block structures in the sequence shown above, and ***a*** and ***b*** in formula (1) satisfy the equation of ***b*/(*a* + *b*)** = 0.5.

$$R'-Si(CH_3)_2O-\left(Si(CH_3)_2O\right)_{18}-Si(CH_3)_2-R' \qquad (F)$$

$$R': -(CH_2)_3-O-(C_3H_6O)_{15}-(C_2H_4O)_{15}-C(=O)-CH_3$$

wherein in formula (F), the oxypropylene units and oxyethylene units each form block structures in the sequence shown above, and ***a*** and ***b*** in formula (1) satisfy the equation of ***b*/(*a* + *b*)** = 0.5.

The HLB value of the polyether-modified siloxane thus obtained was 5.7, and the haze value at 25°C of a 1% by mass aqueous solution was 0.27.

[Comparative Example 1]

The procedure of Example 1 was repeated, except that 856 g of a polyoxyalkylene monoallyl ether represented by the following formula (11), in which oxyethylene units and oxypropylene units are randomly bonded without regard to the sequence described below, and an oxypropylene unit is bonded to the terminal acetyl group, was used in place of 692 g of the polyoxyalkylene monoallyl ether represented by formula (3) in Example 1, thereby obtaining 1,018 g of a polyether-modified siloxane represented by the following formula (G).

$$CH_2{=}CH-CH_2-O\left(C_3H_6O\right)_{19}\left(C_2H_4O\right)_{19}\overset{\displaystyle O}{\overset{\|}{C}}-CH_3 \qquad (11)$$

wherein, in formula (11), the oxypropylene units and oxyethylene units are randomly bonded without regard to the sequence shown above, and an oxypropylene unit is bonded to the acetyl group at the terminal of the polyether.

$$R'-\overset{\displaystyle CH_3}{\underset{\displaystyle CH_3}{SiO}}\left(\overset{\displaystyle CH_3}{\underset{\displaystyle CH_3}{SiO}}\right)_{18}\overset{\displaystyle CH_3}{\underset{\displaystyle CH_3}{Si}}-R' \qquad (G)$$

$$R':\ -\left(CH_2\right)_3O\left(C_3H_6O\right)_{19}\left(C_2H_4O\right)_{19}\overset{\displaystyle O}{\overset{\|}{C}}-CH_3$$

wherein, in formula (G), the oxypropylene units and oxyethylene units are randomly bonded without regard to the sequence shown above, and ***a*** and ***b*** in formula (1) satisfy the equation of ***b*/(*a* + *b*)** = 0.5.

The HLB value of the polyether-modified siloxane thus obtained was 6.0, and a 1% by mass aqueous solution was cloudy and had a haze value at 25°C of 98.

The HLB values of the polyether-modified siloxanes obtained in Examples 1 to 6 and Comparative Example 1, and the haze values at 25°C of 1% by mass aqueous solutions thereof, are summarized in Table 1 below.

[Table 1]

| | Exam. 1 | Exam. 2 | Exam. 3 | Exam. 4 | Exam. 5 | Exam. 6 | Com. Exam. 1 |
|---|---|---|---|---|---|---|---|
| HLB value | 5.6 | 4.2 | 5.7 | 5.3 | 4.2 | 5.7 | 6.0 |
| HAZE value | 0.28 | 2.0 | 0.25 | 3.4 | 1.0 | 0.27 | 98 |

As shown in Table 1 above, the polyether-modified organopolysiloxane of the present invention has a HLB value of 4 to 7 as determined by the Griffin method, and a haze value of 5 or less at 25°C in a 1% by mass aqueous solution. Such a polyether-modified organopolysiloxane having these HLB and haze values exhibits high water solubility. Accordingly, the polyether-modified organopolysiloxane of the present invention has good water solubility without impairing the inherent properties of siloxane, and is therefore useful in various applications such as coating additives, resin additives, and cosmetics.

The present invention is not limited to the foregoing embodiments. The foregoing embodiments are illustrative, and any embodiments having substantially the same configuration as, and achieving substantially the same effects as, those described in the claims of the present invention are included within the scope of the present invention.

## Claims

**1.** A polyether-modified organopolysiloxane represented by the following formula (1), having a block copolymer structure comprising a polyoxyethylene block structure and a polyoxypropylene block structure:

$$R^1-\underset{R}{\overset{R}{|}}{SiO}-\left(\underset{R}{\overset{R}{|}}{SiO}\right)_x-\underset{R}{\overset{R}{|}}{Si}-R^1 \quad (1)$$

wherein R is, independently of each other, a group selected from an alkyl group having 1 to 10 carbon atoms, an aryl group having 6 to 10 carbon atoms, and an aralkyl group having 7 to 10 carbon atoms; x is an integer of 1 to 100; and $R^1$ is, independently of each other, a group represented by the following formula (2):

$$-\left(CH_2\right)_n-O-\left(C_3H_6O\right)_a\left(C_2H_4O\right)_b-R^2 \quad (2)$$

wherein $R^2$ is an alkyl group having 1 to 12 carbon atoms or an acetyl group; n is an integer of 2 to 10; ***a*** is an integer of 3 to 60; ***b*** is an integer of 3 to 60; ***a*** and ***b*** satisfy ***b/(a + b)*** being in the range of 0.3 to 0.8; and the oxypropylene units in parentheses with the subscript ***a*** and the oxyethylene units in parentheses with the subscript ***b*** each have a polyblock structure in the sequence shown in formula (2).

**2.** The polyether-modified organopolysiloxane according to claim 1, wherein the polyether-modified organopolysiloxane has a HLB value of 4 to 7 according to the Griffin method.

**3.** The polyether-modified organopolysiloxane according to claim 1, wherein a 1% by mass aqueous solution of the polyether-modified organopolysiloxane has a haze value of 5 or less at 25°C.

**4.** The polyether-modified organopolysiloxane according to claim 1, wherein the polyether-modified organopolysiloxane has a HLB value of 4 to 7 according to the Griffin method, and a 1% by mass aqueous solution thereof has a haze value of 5 or less at 25°C.

## INTERNATIONAL SEARCH REPORT

International application No. **PCT/JP2024/038059**

**A. CLASSIFICATION OF SUBJECT MATTER**

***C08G 77/46***(2006.01)i; ***C08G 65/336***(2006.01)i; ***C08G 81/00***(2006.01)i; ***C09K 23/42***(2022.01)i; ***C09K 23/54***(2022.01)i
FI: C08G77/46; C09K23/54; C08G65/336; C08G81/00; C09K23/42

According to International Patent Classification (IPC) or to both national classification and IPC

**B. FIELDS SEARCHED**

Minimum documentation searched (classification system followed by classification symbols)

C08G77/46; C08G65/336; C08G81/00; C09K23/42; C09K23/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2002-322398 A (XEROX CORPORATION) 08 November 2002 (2002-11-08) claims 1-8, paragraphs [0012]-[0013], [0020] | 1-4 |
| A | JP 02-043268 A (KIMBERLY CLARK CORP.) 13 February 1990 (1990-02-13) entire text | 1-4 |
| A | JP 2013-060594 A (AIR PRODUCTS & CHEMICALS INC.) 04 April 2013 (2013-04-04) entire text | 1-4 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/038059**

| Patent document cited in search report | Publication date (day/month/year) | Patent family member(s) | Publication date (day/month/year) |
|---|---|---|---|
| JP 2002-322398 A | 08 November 2002 | US 2002/0156155 A1<br>claims 1-8, paragraphs [0012], [0039]-[0040], [0106]-[0107] | |
| JP 02-043268 A | 13 February 1990 | US 4920168 A<br>entire text<br>EP 338393 A2<br>KR 10-1990-0016383 A | |
| JP 2013-060594 A | 04 April 2013 | US 2013/0065998 A1<br>entire text<br>EP 2567999 A1<br>CN 102993815 A<br>KR 10-2013-0028688 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000327787 A
- JP 2003253166 A
- JP 2018070794 A